# EUROPEAN PATENT APPLICATION

(11) **EP 4 629 421 A1**
(43) Date of publication of application: **08.10.2025**
(21) Application number: 23897293.9
(22) Date of filing: 19.10.2023
(51) Int. Cl.: H01M 50/293, H01M 10/613, H01M 10/6568, H01M 50/204, H01M 50/209, H01M 50/213, H01M 50/291

(54) **BATTERY PACK**

(30) Priority: 28.11.2022 JP 2022188931
(71) Applicant: Panasonic Intellectual Property Management Co., Ltd., Kadoma-shi, Osaka 571-0057 (JP)
(72) Inventor: NAITO Keisuke, Osaka 571-0057 (JP)
(74) Representative: Eisenführ Speiser
(86) International application number: PCT/JP2023/037806
(87) International publication number: WO 2024/116636

(57) **Abstract**

A battery pack includes: a case that includes an inlet through which a liquid enters the case and an outlet through which the liquid flows out from the case; a holder that is disposed in the case and holds a plurality of batteries; and a plurality of current collector plates that are disposed in the case and electrically connects the plurality of batteries to each other. The holder includes: a body that is disposed apart from the plurality of batteries; and a battery holder that is connected to the body, is made of a material softer than a material of the body, and includes a contact portion that is in contact with the plurality of batteries.

## Description

### TECHNICAL FIELD

The present disclosure relates to a battery pack.

### BACKGROUND ART

Patent Literature (PTL) 1 discloses a conventional battery pack. The battery pack includes a case with an inlet and an outlet, a holder that is disposed in the case to hold a plurality of batteries, and a plurality of current collector plates that are disposed in the case to electrically connect the plurality of batteries. In the battery pack, insulating coolant flows in through the inlet and out through the outlet, so that the plurality of batteries in the case are cooled.

### Citation List

### Patent Literature

PTL 1: Japanese Unexamined Patent Application Publication No. 2021-511642

### (Translation of PCT Application)

### SUMMARY OF THE INVENTION

In the battery pack, the insulating coolant flows into the case and the coolant comes into direct contact with the batteries. Therefore, the cooling efficiency of the battery pack can be tens to hundreds of times higher than the cooling efficiency of a cooling structure in which the coolant does not come into direct contact with the batteries.

However, in the battery pack described above, since the coolant comes into direct contact with the batteries, the batteries are easily moved against the holder under the force from the flowing coolant, and may vibrate against the holder. This is likely to cause damage to the connecting portions and the like between the current collector plates and the batteries.

A battery pack according to the present disclosure includes: a case that includes an inlet through which a liquid enters the case and an outlet through which the liquid flows out from the case; a holder that is disposed in the case and holds a plurality of batteries; and a plurality of current collector plates that are disposed in the case and electrically connects the plurality of batteries to each other. The holder includes: a body that is disposed apart from the plurality of batteries; and a battery holder that is connected to the body, is made of a material softer than a material of the body, and includes a contact portion that is in contact with the plurality of batteries.

The battery pack according to the present disclosure facilitates an increased cooling efficiency, and also inhibits the movement of the batteries against the holder.

### BRIEF DESCRIPTION OF THE DRAWINGS

[FIG. 1] FIG. 1 is a schematic cross-sectional view of a battery pack according to Embodiment 1 of the present disclosure in a plane including an inlet, an outlet, and a thickness direction of a holder.
[FIG. 2] FIG. 2 is a schematic plan view of the holder as seen from a first side in the thickness direction.
[FIG. 3] FIG. 3 is a schematic cross-sectional view of a first holder of a holder according to Embodiment 2 taken along a plane that passes through a battery holder and is orthogonal to a height direction of the holder.
[FIG. 4] FIG. 4 is a schematic plan view of a holder according to Embodiment 3 that corresponds to FIG. 2.
[FIG. 5] FIG. 5 is a partial cross-sectional view of a holder according to Embodiment 4 in a plane including a thickness direction of the holder.

### DESCRIPTION OF EMBODIMENTS

Exemplary embodiments according to the present disclosure will be described in detail below with reference to the attached drawings. In the case where the following description includes different embodiments and variations, appropriately combining the characteristic parts thereof into another embodiment is taken into account from the beginning. In the embodiments that will be described below, the identical parts are denoted by the same reference signs in the drawings, and the repeated description thereof is omitted. Furthermore, the drawings include some schematic views, and the dimensional relationships in the depth, width, and height of components between the individual drawings are therefore not always the same.

In the following description, battery 5 is a cylindrical battery and the height direction of battery 5 coincides with the axial direction of battery 5. However, the battery does not have to be the cylindrical battery, but may be any other batteries such as a prismatic battery. Among the structural elements described below, structural elements other than those recited in an independent claim representing the most generic concept are optional and non-essential structural elements.

### (Embodiment 1)

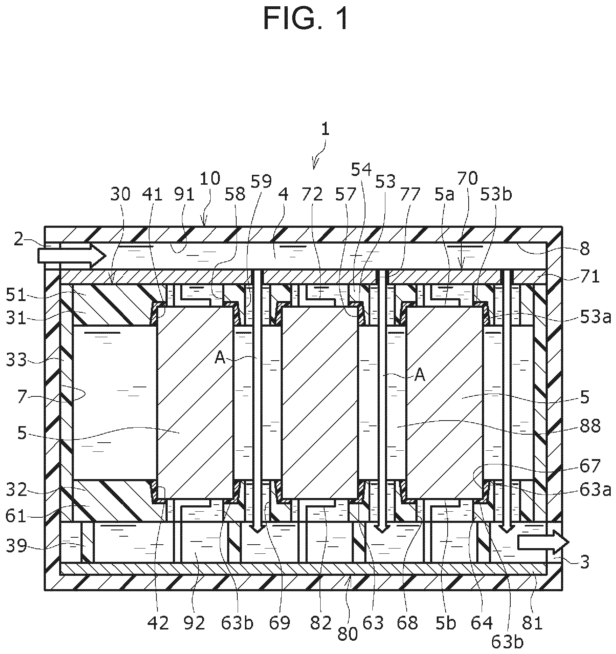

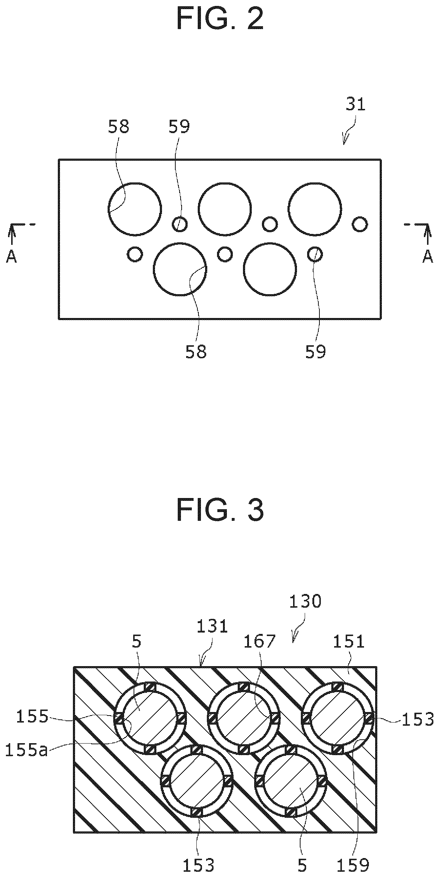

FIG. 1 is a schematic cross-sectional view of battery pack 1 according to Embodiment 1 of the present disclosure in a plane including inlet 2, outlet 3, and a thickness direction of holder 20. FIG. 2 is a schematic plan view of holder 30 as seen from a first side in a thickness direction of holder 30. FIG. 1 corresponds to the cross-sectional view taken along line A-A in FIG. 2.

As illustrated in FIG. 1, battery pack 1 includes: case 10; holder 30 that is disposed in case 10 to hold a plurality of batteries 5; and two current collector plates 70 and 80 that are disposed in case 10 to electrically connect the plurality of batteries 5. Case 10 is made of resin or the like, and includes battery compartment 7 inside case 10. Case 10 includes inlet 2 that includes one or more through-holes and outlet 3 that includes one or more through-holes. Inlet 2 that includes one or more through-holes and outlet 3 that includes one or more through-holes are the only paths for placing battery compartment 7 in communication with the outside of case 10 are .

A tip end portion of an inlet-side pipe (not illustrated) that allows insulating coolant 4 as an example of a liquid to flow into inlet 2 is connected to inlet 2. A tip end portion of an outlet-side pipe (not illustrated) that allows coolant 4 to flow out of outlet 3 is connected to outlet 3. Battery compartment 7 is included in circulation path 8. For example, circulation path 8 includes an internal chamber of a pump (not illustrated). The pump circulates coolant 4 in circulation path 8, and coolant 4 flows from inlet 2 to outlet 3 in battery compartment 7.

Holder 30 is made of an insulating resin or the like. Holder 30 includes first holder 31 that holds a first end of each battery 5 in the height direction of battery 5, second holder 32 that holds a second end of each battery 5 in the height direction of battery 5, and connectors 33 that extend generally parallel to the height direction of battery 5 to connect first holder 31 and second holder 32.

First holder 31 includes a plurality of first holding portions 41 for holding the first ends of the plurality of batteries 5 in the height direction, spaced apart from each other in a generally parallel manner. Second holder 32 includes a plurality of second holding portions 42 for holding the second ends of the plurality of batteries 5 in the height direction, spaced apart from each other in a generally parallel manner.

The first ends of the plurality of batteries 5 are fixed and held by first holding portions 41 of first holder 31, and the second ends of the plurality of batteries 5 are fixed and held by second holding portions 42 of second holder 32. Thereafter, a first end of each connector 33 in the height direction is j oined to first holder 31 by, for example, laser welding, ultrasonic welding, hot plate welding, or adhesive, and a second end of connector 33 in the height direction is joined to second holder 32 by, for example, laser welding, ultrasonic welding, hot plate welding, or adhesive. Holder 30 can be formed by using, for example, such a technique.

Although the case in which holder 30 has an integral structure has been described, holder 30 does not have to include connectors or an integral structure. Specifically, holder 30 may include a first holder that holds the first ends of the batteries in the height direction and a second holder that holds the second ends of the batteries in the height direction, and the first holder and the second holder do not have to be connected to each other.

First holder 31 includes: body 51 that is disposed apart from batteries 5; and battery holders 53 that are made of a material softer than the material of body 51 and include contact portions 57 that are in contact with batteries 5. Body 51 is made of hard resin, such as ABS resin, polycarbonate, or phenolic resin. On the other hand, battery holders 53 are made of a resin material softer than the material of body 51. Battery holders 53 are made of, for example, an elastomer, such as urethane rubber, silicon rubber, or fluorine-containing rubber. Main body 51 and battery holders 53 are molded integrally, for example, by two-color molding.

Each battery holder 53 includes: tubular portion 53a that covers and holds the outer periphery of the first end of battery 5 in the height direction over the entire circumference; and circular ring portion 53b that protrudes from tubular portion 53a inward in the radial direction of battery 5 and covers the outer peripheral side of the end face of the first end of battery 5. Body 51 includes overlapping portions 54 that overlap circular ring portions 53b in the height direction. In the state in which first holder 31 properly holds the axial first end of battery 5, tubular portion 53a is compressed in the radial direction and circular ring portion 53b is compressed in the height direction.

Body 51 includes rigid overlapping portions 54 that overlap circular ring portions 53b in the height direction, so that sufficient rigidity of first holder 31 can be ensured. Moreover, body 51 includes rigid overlapping portions 54 that overlap circular ring portions 53b in the height direction. With this, the compression ratio of each battery holder 53 in the state in which battery 5 is held by first holder 31 can be increased, the first end of battery 5 can be closely held by battery holder 53, and the first end of battery 5 can be held firmly by battery holder 53.

In a similar manner, second holder 32 includes: body 61 that is disposed apart from batteries 5; and battery holders 63 that are connected to body 61, are made of a material softer than the material of body 61, and includes contact portions 67 that are in contact with batteries 5. Body 61 is made of hard resin, such as ABS resin, polycarbonate, or phenolic resin. On the other hand, battery holders 63 are made of a resin material softer than the material of body 61. Battery holders 63 are made of, for example, an elastomer, such as urethane rubber, silicon rubber, or fluorine-containing rubber. Main body 61 and battery holders 63 are molded integrally, for example, by two-color molding.

Each battery holder 63 includes: tubular portion 63a that covers and holds the outer periphery of the second end of battery 5 in the height direction over the entire circumference; and circular ring portion 63b that protrudes from tubular portion 63a inward in the radial direction of battery 5 and covers the outer periphery of the end face of the second end of battery 5. Body 61 includes overlapping portions 64 that overlap circular ring portions 63b in the height direction. In the state in which second holder 32 properly holds the axial second end of battery 5, tubular portion 63a is compressed in the radial direction and circular ring portion 63b is compressed in the height direction.

Body 61 includes rigid overlapping portions 64 that overlap circular ring portions 63b in the height direction, so that sufficient rigidity of second holder 32 can be ensured. Moreover, body 61 includes rigid overlapping portions 64 that overlap circular ring portions 63b in the height direction. With this, the compression ratio of each battery holder 63 in the state in which battery 5 is held by second holder 32 can be increased, the second end of battery 5 can be held closely by battery holder 63, and the second end of battery 5 can be held firmly by battery holder 63.

Battery pack 1 includes first current collector plate 70 and second current collector plate 80. First current collector plate 70 is made of a metal material. First current collector plate 70 includes plate portion 71 and a plurality of lead portions 72 each protruding from plate portion 71 toward first terminal 5a of battery 5 and joined to first terminal 5a. Each lead portion 72 has a tongue body shape. Lead portion 72 is formed, for example, by performing press forming on a metal plate. Plate portion 71 includes a through-hole (not illustrated) formed when each lead portion 72 is formed, at least in part of the portion of plate portion 71 that overlaps lead portion 72 in the thickness direction.

As illustrated in FIG. 1 and FIG. 2, first holder 31 includes a plurality of first through-holes 58 provided at positions that overlap at least in part of lead portions 72 in the height direction of batteries 5, and a plurality of second through-holes 59 provided at positions that do not overlap any of lead portions 72 in the height direction of batteries 5. Each of first through-holes 58 and second through-holes 59 extends in the height direction of battery 5.

As illustrated in FIG. 1, the end face of plate portion 71 on the second side in the height direction abuts the end face of first holder 31 on the first side in the height direction. In this state, plate portion 71 is fixed to first holder 31 by fixing means, e.g., adhesive or fastening means.

Lead portion 72 is housed in first through-hole 58. The tip portion of lead portion 72 is joined to the end face of the first end (first terminal 5a) of battery 5 by welding or the like. Inlet 2 is positioned on the first side of first current collector plate 70 in the height direction. Battery compartment 7 includes, on the first side of first current collector plate 70, first-side flow path 91 that extends in a direction orthogonal to the height direction and through which coolant 4 flows.

Second current collector plate 80 is made of a metal material, and includes plate portion 81 and a plurality of lead portions 82 each protruding from plate portion 81 toward second terminal 5b of battery 5 and joined to second terminal 5b. Each lead portion 82 has a tongue body shape. Lead portion 82 is formed, for example, by performing press forming on a metal plate. Plate portion 81 includes a through-hole (not illustrated) formed when each lead portion 82 is formed, at least in part of the portion of plate portion 81 that overlaps lead portion 82 in the thickness direction.

Second holder 32 includes a plurality of first through-holes 68 provided at positions that overlap at least in part of lead portions 82 in the height direction of batteries 5, and a plurality of second through-holes 69 provided at positions that do not overlap any of lead portions 82 in the height direction of batteries 5. Each of first through-holes 68 and second through-holes 69 extends in the height direction of battery 5.

As illustrated in FIG. 1, second holder 32 includes a plurality of pillar portions 39 that extend in the height direction and are spaced apart from each other. The end face of plate portion 81 on the first side in the height direction is supported by the end faces of the plurality of pillar portions 39 on the second side in the height direction. In this state, plate portion 81 is fixed to the end faces of two or more pillar portions 39 on the second side in the height direction by fixing means, e.g., adhesive or fastening means.

Lead portion 82 is housed in first through-hole 68. The tip end portion of lead portion 82 is joined to the end face of the second end (second terminal 5b) of battery 5 by welding or the like. Outlet 3 is positioned between second holder 32 and plate portion 81 of second collector plate 80 with respect to the height direction. Battery compartment 7 includes second-side flow path 92 through which coolant 4 flows, at a position between second holder 32 and plate portion 81 of second current collector plate 80 with respect to the height direction. Second-side flow path 92 extends in a direction orthogonal to the height direction. The inside of battery pack 1 is filled with coolant 4 without any space.

The case has been described in which first current collector plate 70 abuts the end face of first holder 31 on the first side and a portion of the flow path through which coolant 4 flows is provided on the first side of first current collector plate 70 in the height direction. The case also has been described in which second current collector plate 80 is supported by the end faces of the plurality of pillar portions 39 of second holder 32. However, the first current collector plate may be supported by the end faces of a plurality of pillar portions that are disposed on the first holder, spaced apart from each other, and extend in the height direction. It may also be that the second current collector plate abuts the end face of the second holder on the second side, and a portion of the flow path through which the coolant flows is provided on the second side of the second current collector plate in the height direction.

In the above configuration, coolant 4 that flows in from inlet 2 flows through first-side flow path 91 and then passes through through-holes 77 of first current collector plate 70 and second through-holes 59 of first holder 31, as indicated by arrows A. Subsequently, coolant 4 flows into spaces 88 between first holder 31 and second holder 32, passes through second through-holes 69 of second holder 32, and flows into second-side flow path 92. Coolant 4 then flows out of battery compartment 7 from second side flow path 92 via outlet 3. Coolant 4 that has flown in from inlet 2 absorbs the heat released from batteries 5 and becomes heated while flowing through battery compartment 7, and heated coolant 4 flows out from outlet 3. This heat transfer is used to cool batteries 5.

As described above, battery pack 1 includes: case 10 that includes inlet 2 in which insulating coolant 4 flows and outlet 3 out which liquid 4 flows; holder 30 that is disposed in case 10 to hold a plurality of batteries 5; and a plurality of current collector plates 70 and 80 that are disposed in case 10 to electrically connect the plurality of batteries 5 to each other. Holder 30 includes: bodies 51, and 61 that are disposed apart from the plurality of batteries 5; and battery holders 53 and 63 that are connected to bodies 51 and 61, are made of a material softer than a material of bodies 51 and 61, and include contact portions 57 and 67 that are in contact with the plurality of batteries 5.

According to the present disclosure, insulating coolant 4 flows through case 10 to bring coolant 4 into direct contact with batteries 5. Therefore, the cooling efficiently in the present disclosure is significantly higher than the cooling efficiency in a cooling structure that does not allow the coolant to directly contact the batteries.

Moreover, holder 30 includes bodies 51 and 61 made of a rigid material, leading to an increase in the rigidity of holder 30. Therefore, even when force is applied to holder 30 from coolant 4 flowing within case 10, holder 30 is not easily deformed and the durability of holder 30 can also be increased.

Moreover, in holder 30, contact portions 57 and 67 that contact batteries 5 are made of a material softer than the material of bodies 51 and 61, so that batteries 5 can be closely held by contact portions 57 and 67, and batteries 5 can be held firmly. Therefore, the movement of batteries 5 against holder 30 can be reduced, preventing the joint portions between current collector plates 70 and 80 and batteries 5 from being damaged.

Moreover, current collector plates 70 and 80 may include: plate portions 71 and 81; and a plurality of lead portions 72 and 82 which protrude from plate portions 71 and 81 toward terminals 5a and 5b of batteries 5, and are joined to terminals 5a and 5b. Holder 30 may include: a plurality of first through-holes 58 and 68 that are provided at positions that overlap at least in part of lead portions 72 and 82 in a height direction of batteries 5; and a plurality of second through-holes 59 and 69 that are provided at positions that do not overlap any of lead portions 72 and 82 in the height direction of batteries 5.

With this configuration, coolant 4 is capable of flowing through second through-holes 59 and 69, leading to an increase in the flow rate of coolant 4. Therefore, the cooling efficiency of batteries 5 can be further increased.

### (Embodiment 2)

In Embodiment 1, the case has been described in which battery holders 53 and 63 closely hold the outer periphery of each battery 5 over the entire circumferential. However, the battery holders do not have to closely hold the outer periphery of the battery over the entire circumference. In Embodiment 2, the case will be described in which the battery holders closely hold only a portion of the circumference of the outer periphery of the battery. In the following embodiments including Embodiment 2, explanations of the same operations and effects and variations as Embodiment 1 will be omitted.

FIG. 3 is a schematic cross-sectional view of first holder 131 of holder 130 according to Embodiment 2 taken along a plane that passes through battery holder 153 and is orthogonal to the height direction of holder 130. As illustrated in FIG. 3, holder 130 includes body 151 and battery holders 153 that are integrally formed with body 151 and made of a material softer than the material of body 151.

Each battery holder 153 includes a plurality of pillar portions 155 spaced circumferentially around the outer periphery of battery 5 and having a pillar shape. The tip end faces 155a of the plurality of pillar portions 155 are in contact with the outer periphery of battery 5, thereby restraining battery 5 in the radial direction. Holder 130 includes through-grooves 159 through which the coolant passes, at positions between circumferentially adjacent pillar portions 155. The both ends of each through-groove 159 in the height direction that is the direction in which through-groove 159 extends are open in the height direction. In addition, the portion of through-groove 159 on the battery 5 side in the radial direction of battery 5 is open toward battery housing space 167 and is in communication with battery housing space 167.

With this configuration, the coolant passes through through-grooves 159, allowing the coolant to flow in the vicinity of batteries 5. Thus, the cooling efficiency of batteries 5 can be easily increased.

It is preferable that the plurality of pillar portions 155 are provided at equal intervals in the circumferential direction, and each pillar portion 155 extends in the radial direction of battery 5. However, the plurality of pillar portions may be provided at unequal intervals in the circumferential direction, and at least one pillar portion may extend in a direction that is inclined with respect to the radial direction.

In the example illustrated in FIG. 3, there are no through-holes that correspond to the plurality of second through-holes 59 and 69 provided at the positions that do not overlap any of lead portions 72 and 82 in the height direction of batteries 5 in Embodiment 1. However, in Embodiment 2, too, through-holes provided at positions that do not overlap any of the lead portions in the height direction may be included.

### (Embodiment 3)

As illustrated in FIG. 2, in Embodiment 1, a plurality of second through-holes 59 and 69 provided at the positions that do not overlap any of lead portions 72 and 82 in the height direction of batteries 5 are all approximately identical to each other and have all approximately the same cross-sectional area in the cross section orthogonal to the direction in which through-holes 59 and 69 extend. However, the plurality of second through-holes provided at the positions that do not overlap any of the lead portions in the height direction of the batteries may include two or more through-holes having different cross-sectional areas.

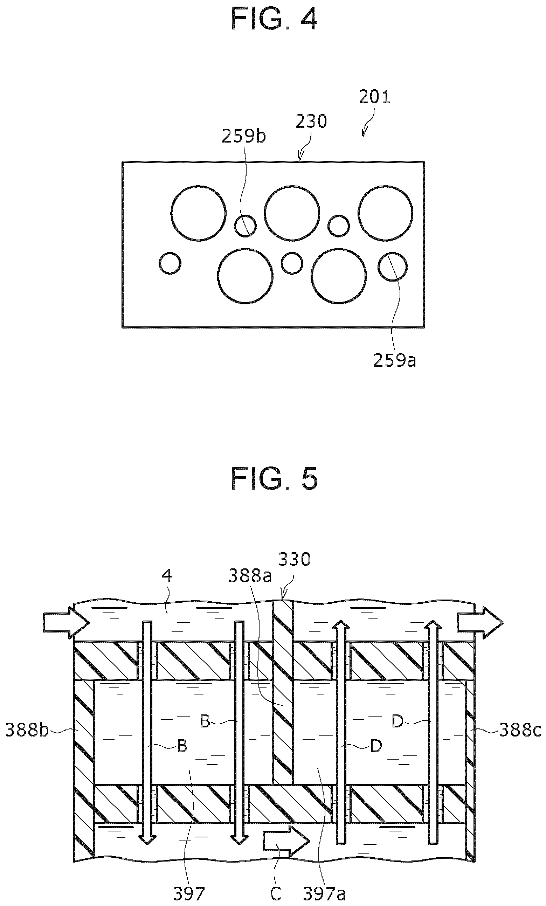

For example, as illustrated in FIG. 4, i.e., the schematic plan view of holder 230 according to Embodiment 3 corresponding to FIG. 2, in the schematic plan view, the cross-sectional area of second through-hole 259a provided in a portion of the outer edge portion of holder 230 (the cross-sectional area in the cross section orthogonal to the direction in which second through-hole 259a extends) may be larger than the cross-sectional area of each second through-hole 259b provided in the other portions.

Here, second through-hole 259a is, for example, provided in the vicinity of a heat source, such as a motor, positioned outside battery pack 201. This allows a plurality of batteries 5 in battery pack 201 to be cooled easily and evenly, leading to a reduction in variations in the battery temperature of the plurality of batteries 5 in battery pack 201.

When the temperature at the central portion of a holder having a high battery density is more easily increased than the temperature at the outer edge portion of the holder having a low battery density, contrary to the example illustrated in FIG. 4, it is preferable that the cross-sectional area of the second through-hole provided at the outer edge portion of the holder is smaller than the cross-sectional area of the second through-hole provided at the central portion of the holder. In this way, it is possible to easily cool the plurality of batteries in a battery pack evenly, so that variations in the battery temperature of the plurality of batteries in the battery pack can be reduced.

In Embodiment 2, as illustrated in FIG. 3, the total cross-sectional area of the plurality of through-grooves 159 provided around each battery 5 is identical to each other, regardless of the position where battery 5 is held. However, the total cross-sectional area of the plurality of through-grooves provided around each battery (around the outer periphery of the battery) may vary depending on the position where the battery is held. With this, when the temperatures of the plurality of batteries in a battery pack are likely to vary, in a similar manner to Embodiment 3, it is easy to achieve equalization of heat of the plurality of batteries in the battery pack, leading to a reduction in variations in the battery temperature of the plurality of batteries in the battery pack.

### (Embodiment 4)

In Embodiment 1, the case has been described in which the flow path through which the coolant flows does not include a U-shaped flow path portion. However, as illustrated in FIG. 5, i.e., a partial cross-sectional view in a plane including the thickness direction of holder 330 according to Embodiment 4, holder 330 may include partition walls 388a, 388b, and 388c that regulate flow path 397 so that flow path 397 for coolant 4 passing through holder 330 includes U-shaped flow path portion 397a in which the flow of coolant 4 is indicated by arrows B, C, and D.

In this way, the path length of flow path 397 for coolant 4 in the battery compartment can be increased, allowing the batteries to be efficiently cooled with coolant 4. In the example illustrated in FIG. 5, only one U-shaped flow path portion 397a is included. However, two or more U-shaped flow path portions may be included, and the flow path for the coolant may include two or more meandering iterations.

### (Variations)

The present disclosure is not limited to the embodiments and the variations thereof that have been described. Various modifications or alterations may be made within the scope of the present disclosure as defined by the appended claims or their equivalents.

For example, the case has been described in which current collector plate 70 for electrically connecting the first electrodes of the plurality of batteries 5 and current collector plate 80 for electrically connecting the second electrodes of the plurality of batteries 5 are opposed to each other across batteries 5 in the height direction of batteries 5. However, both the current collector plate for electrically connecting the first electrodes of the plurality of batteries and the current collector plate for electrically connecting the second electrodes of the plurality of batteries may be disposed on one side of the batteries in the height direction. Moreover, in this case, a plate member made of an insulating material may be interposed between the current collector plate for electrically connecting the first electrodes of the plurality of batteries and the current collector plate for electrically connecting the second electrodes of the plurality of batteries to reliably prevent a short circuit between the two current collector plates. Moreover, the case has been described in which battery pack 1 includes two current collector plates 70 and 80. However, a battery pack may include three or more current collector plates. In that case, the electrical connection of the plurality of batteries can include series connections and parallel connections.

### REFERENCE MARKS IN THE DRAWINGS

- 1, 201: battery pack
- 2: inlet
- 3: outlet
- 4: coolant
- 5: battery
- 7: battery compartment
- 8: circulation path
- 10: case
- 20: holder
- 30, 130, 230, 330: holder
- 31, 131: first holder
- 32: second holder
- 33: connector
- 39: pillar portion
- 41: first holding portion
- 42: second holding portion
- 51, 61, 151: body
- 53, 63, 153: battery holder
- 53a, 63a: tubular portion
- 53b, 63b: circular ring portion
- 54, 64: overlapping portion
- 57, 67: contact portion
- 58, 68: first through-hole
- 59, 69, 259a, 259b: second through-hole
- 70: first current collector plate
- 71, 81: plate portion
- 72, 82: lead portion
- 77: through-hole
- 80: second current collector plate
- 91: first-side flow path
- 92: second-side flow path
- 155: pillar portion
- 155a: tip end face
- 159: through-groove
- 167: battery housing space
- 388a, 388b, 388c: partition wall
- 397: flow path
- 397a: U-shaped flow path portion

## Claims

1. A battery pack comprising:
a plurality of batteries;
a case that includes an inlet through which a liquid enters the case and an outlet through which the liquid flows out from the case;
a holder that is disposed in the case and holds the plurality of batteries; and
a plurality of current collector plates that are disposed in the case and electrically connects the plurality of batteries to each other,
wherein the holder includes:
a body that is disposed apart from the plurality of batteries; and
a battery holder that is connected to the body, is made of a material softer than a material of the body, and includes a contact portion that is in contact with the plurality of batteries.

2. The battery pack according to claim 1,
wherein each of the plurality of current collector plates includes:
a plate portion; and
a plurality of lead portions each of which protrudes from the plate portion toward a corresponding one of a plurality of terminals of the plurality of batteries, and is joined to the corresponding one of the plurality of terminals, and
the holder includes:
a plurality of first through-holes that are provided at positions that overlap at least in part of the plurality of lead portions in a height direction of the plurality of batteries; and
a plurality of second through-holes that are provided at positions that do not overlap any of the plurality of lead portions in the height direction of the plurality of batteries.

3. The battery pack according to claim 1 or claim 2,
wherein the battery holder includes a plurality of pillar portions that are spaced circumferentially around an outer periphery of each of the plurality of batteries, and
the holder includes a plurality of through-grooves each of which is provided between circumferentially adjacent ones of the plurality of pillar portions.

4. The battery pack according to claim 2,
wherein a cross-sectional area of a cross section of a first one of the plurality of second through-holes is different from a cross-sectional area of a cross section of a second one of the plurality of second through-holes, the cross section of the first one being orthogonal to a direction in which the first one extends, the cross-section of the second one being orthogonal to a direction in which the second one extends.

5. The battery pack according to claim 3,
wherein a total cross-sectional area of cross sections of the plurality of through-grooves provided around each of the plurality of batteries varies depending on a position at which the battery is held, the cross sections being orthogonal to a direction in which the plurality of through-grooves extend.

6. The battery pack according to claim 1 or claim 2,
wherein the holder includes a partition wall that regulates a flow path of the liquid passing through the holder to form a U-shaped flow path portion in the flow path.
